# EUROPEAN PATENT APPLICATION

(11) **EP 3 340 134 A1**
(43) Date of publication of application: **27.06.2018**
(21) Application number: 16837109.4
(22) Date of filing: 16.08.2016
(51) Int. Cl.: G06Q 10/06

(54) **SALES SUPPORT COMPUTER PROGRAM, SALES SUPPORT APPLICATION PROGRAM, SALES SUPPORT SYSTEM, AND CONTROL METHOD THEREFOR**

(30) Priority: 17.08.2015 JP 2015160291
(71) Applicant: Recruit Holdings Co., Ltd., Tokyo 104-0061 (JP)
(72) Inventor: IHARA, Shingo, Tokyo 100-6640 (JP)
(74) Representative: EIP
(86) International application number: PCT/JP2016/073910
(87) International publication number: WO 2017/030120

(57) **Abstract**

In order to enable real-time detection of whether or not there is any client having difficulty in operating a client device and thereby to provide a prompt and sufficient follow-up action to a client in need of immediate help, a sales support computer program according to the present disclosure causes a computer to function as: an information collection unit for collecting, via a network, information about operation histories of client devices operated by clients; a state analysis unit for analyzing at an appropriate time the states of the client devices operated by the clients on the basis of the operation histories; and a follow-up necessity determination unit for determining at an appropriate time whether or not an immediate follow-up action for a client is necessary on the basis of the operation states.

## Description

### Cross-references to Related Applications

This application is based on Japanese Patent Application No. 2015-160291, filed on August 17, 2015, the contents of all of which are incorporated herein as a reference.

### Technical Field

The present disclosure relates to a sales support computer program, a sales support application program, a sales support system, and a control method therefor.

### Background Art

The so-called "route business" (also referred to as "route sales") is one of sales forms for acquiring a new negotiation opportunity in addition to the retention of existing clients by visiting a business connection of the own company on a regular or non-regular basis. Unlike new business development sales or individual project-based sales, it can be said that this kind of route business is an activity of performing a follow-up action, providing a support, or the like (hereinafter, simply referred to as "follow-up action") for an existing client to increase the sales unit price per client. As this kind of route business, for example, Patent Document 1 describes a technique in which a sales representative makes the rounds of targets to visit regularly (for example, several times at regular intervals over a month period or the like) and formally according to a manual or the like.

### Citation List

### Patent Document

Patent Document 1: Japanese Patent Application Laid-Open No. 2003-99092 (for example, paragraph 0024 and the like)

### Summary

### Technical Problem

Incidentally, depending on the sales performance or operational status of products, commodities, devices, systems or the like delivered or lent to clients, some clients may need little follow-up action, while other clients may need frequent and careful follow-up actions to the contrary. Therefore, visiting clients for sales regularly and formally at the same frequency without distinguishing between both may lead to a decrease in the sales efficiency, the sales effect, and the client satisfaction level.

To eliminate the inconvenience, it is considered to be useful to analyze the operation histories of the devices, systems, and the like used in stores by clients (hereinafter, referred to as "client devices") to extract or select clients requiring follow-up actions or stores thereof (hereinafter, collectively referred to as "clients") and to create and utilize a so-called "sales support map" in which the result of the extraction or selection is displayed on the map so that a sales representative is able to recognize the result. The sales representative is able to access the website to which the "sales support map" is uploaded from outside the office or from the sales office to check whether or not there is any client likely to need to be provided with a follow-up action in his sales area or in the vicinity of the current place.

It is, however, assumed that some clients do not sufficiently understand a method of operating their client devices or are inexperienced in handling the client devices, and therefore are currently confused in operating the client devices and require help (support or assistance) right now. To create the aforementioned "sales support map," however, it is necessary to analyze the operation histories of the client devices in a certain period of time, and therefore it is difficult to extract or select the clients having difficulty in operating the client devices in real time. Accordingly, even if a useful sales tool such as the "sales support map" were used, it is extremely difficult to provide a prompt and sufficient follow-up actions to clients requiring immediate help.

The present disclosure has been provided in view of the above circumstances. Therefore, it is an object of the present disclosure to provide a sales support computer program, a sales support application program, a sale support system, and a control method therefor enabling real-time detection of whether or not there is any client having difficulty in operating a client device, thereby providing a prompt and sufficient follow-up action to the client in need of immediate help.

### Solution to Problem

A sales support computer program according to one aspect of the present disclosure causes a computer (not limited to a single computer or a single type of computers, but may be a plurality of computers or multiple types of computers; the same applies hereinafter) to function as: an information collection unit that collects, via a network, information about operation histories of client devices operated by clients; a state analysis unit that analyzes at an appropriate time the states of the client devices operated by the clients on the basis of the operation histories; and a follow-up necessity determination unit that determines at an appropriate time whether or not an immediate follow-up action for the client is necessary on the basis of the operation states.

Furthermore, the follow-up necessity determination unit may calculate a degree that the client is confused about the operation of the client device. In this case, the follow-up necessity determination unit may determine whether or not an immediate follow-up action for the client is necessary on the basis of the degree that the client is confused.

Moreover, the follow-up necessity determination unit may extract a result of actual operation processing performed by the client from the operation histories, determine whether or not an immediate follow-up action for a client is necessary on the basis of the result of actual operation processing, and/or by comparing the result of actual operation processing with normal (proper) operation processing assumed in the client device, and/or calculate a degree that the client is confused.

Furthermore, the computer may be caused to function as a notification unit that notifies a sales representative of a follow-up command for the client determined to be in need of the immediate follow-up action or that directly or indirectly notifies the client, determined to be in need of the immediate follow-up action, of the content of the follow-up action. In this case, the notification unit may determine the sales representative notified of the above command on the basis of the location information of the client and the location information of the plurality of sales representatives.

Further, a sales support application program according to one aspect of the present disclosure causes a computer used by a sales representative to function as a follow-up command recognition unit that makes the sales representative recognize a follow-up command notified of by the notification unit that is executed by the sales support computer program according to the one aspect of the present disclosure.

Furthermore, a sales support system according to still another aspect of the present disclosure includes: an information collection unit that collects, via a network, information about operation histories of client devices operated by clients; a state analysis unit that analyzes at an appropriate time the states of the client devices operated by the clients on the basis of the operation histories; and a follow-up necessity determination unit that determines at an appropriate time whether or not an immediate follow-up action for the client is necessary on the basis of the operation states.

Still further, a method of controlling a sales support system having an information collection unit, a state analysis unit, and a follow-up necessity determination unit according to still another aspect of the present disclosure, includes: collecting, via a network, information about operation histories of client devices operated by clients by using the information collection unit; analyzing at an appropriate time the states of the client devices operated by the clients on the basis of the operation histories by using the state analysis unit; and determining at an appropriate time whether or not an immediate follow-up action for the client is necessary on the basis of the operation states by using the follow-up necessity determination unit.

### Advantageous Effects of Invention

According to the present disclosure, the present invention enables the states of client devices operated by clients to be analyzed at an appropriate time from the operation histories of the client devices and enables real-time determination based on the analysis, at an appropriate time and in real time, of whether or not an immediate follow-up action is necessary for a client, thereby enabling a prompt and sufficient follow-up action to the client. In other words, the present invention enables real-time detection of whether or not there is any client having difficulty in operating a client device, thereby enabling the provision of a prompt and sufficient follow-up action for the client in need of immediate help. In addition, these enable increase in the sales efficiency, the client satisfaction level, and the sales effect, thereby enabling not only the retention of existing clients but also increase in the opportunity of acquiring a new transaction.

### Brief Description of Drawings

Fig. 1 is a system block diagram schematically illustrating a preferred embodiment of a network configuration or the like related to a sales support system according to the present disclosure.
Fig. 2 is a system block diagram schematically illustrating an example of a configuration of a server apparatus in the sales support system according to the present disclosure.
Fig. 3 is a system block diagram schematically illustrating an example of a configuration of a client device (register device) in the sales support system according to the present disclosure.
Fig. 4 is a system block diagram schematically illustrating an example of a configuration of a user device (user terminal) in the sales support system according to the present disclosure.
Fig. 5 is a flowchart illustrating an example of (a part of) processing flow in the sales support system according to the present disclosure.

### Description of Embodiments

Hereinafter, detailed description will be made on preferred embodiments of the present disclosure. It should be understood that the following preferred embodiments are intended for purposes of illustration only of the present disclosure and are not intended to limit the scope of the present disclosure only to the preferred embodiments. In addition, various modifications can be made on the present disclosure without departing from the scope and principles of the present disclosure. Furthermore, a person skilled in the art is able to adopt embodiments in which elements described below are replaced with equivalent ones and these embodiments are also included in the scope of the present disclosure. Still further, it is to be understood that the vertical, horizontal, or other positional relationship is based on the illustration of the drawings unless otherwise specified. Furthermore, the various dimensional ratios in the drawings are not limited to the illustrated ratios.

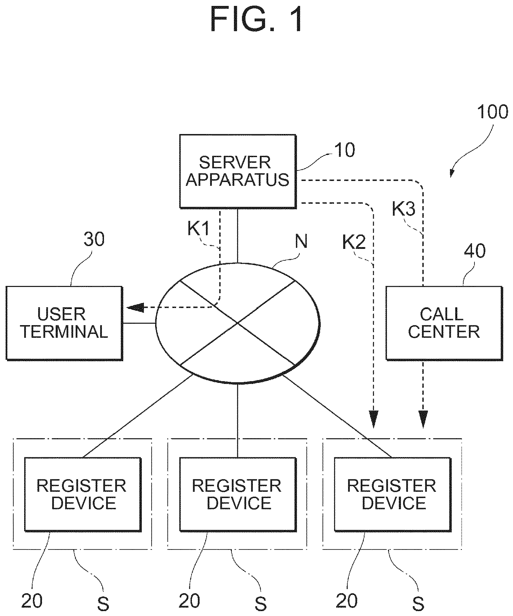

Fig. 1 is a system block diagram schematically illustrating a preferred embodiment of a network configuration or the like related to a sales support system according to the present disclosure. A sales support system 100 includes one or more register devices 20 (client devices) deployed in each of a plurality of clients S and a server apparatus 10 connected to the register devices 20 via a network N.

The server apparatus 10, which is a network node having some of the functions of the sales support system 100, is formed of, for example, a host computer having high computing power and expresses server functions by the running of a predetermined server program in the host computer.

In this embodiment, the server apparatus 10 stores information (login, logout, various settings, error notification, accounting processing, etc.) about operation histories by a person in charge of the register transmitted from the register devices 20 deployed in the plurality of clients S, analyzes at an appropriate time the states of the operation of the register devices 20 on the basis of the information about the operations histories, determines at an appropriate time whether or not an immediate follow-up action for a client S on the basis of a result of the analysis, and calculates at an appropriate time the degree of confusion of the person in charge of the register in the operation of the register device 20 if necessary. In addition, the server apparatus 10 notifies a user terminal 30 (information terminal device) possessed by a sales representative of a command evoking a follow-up action for the client S via a network N or notifies the client S of the content of the follow-up action (a tutorial of various operation methods of the register device 20, etc.) directly by using an e-mail, an electronic message, or the like or indirectly via a telephone or the like from a call center 40 or the like.

Moreover, the network N is a communication network configured of a mixture of, for example, a wired network (a local area network [LAN], a wide area network [WAN], a value-added network [VAN], or the like) and a wireless network (a mobile communication network, a satellite communication network, Bluetooth®, Wireless Fidelity [WiFi], High Speed Downlink Packet Access [HSDPA], or the like).

On one hand, the register device 20 is a machine (including a device, an instrument, a terminal, and a system) having a cash register function and is not particularly limited in its form. As a more specific example, the register terminal 20 may be a POS register (including not only a register into which a POS function is integrated, but also a register system provided with a device having the POS function and a cash register device, and the like), a device into which application software for implementing the POS function is installed, a device which executes application software for implementing the POS function stored in the cloud or executes a system having the POS function provided on the Web, and the like. As another specific example, a portable information terminal device, which is assumed as the register device 20 in the present embodiment, is a tablet-type terminal (including a mobile phone typified by a smartphone) using a user interface such as a touch panel and a high-visibility display and having a communication function with the network N (it can be said that the tablet-type terminal is one of network nodes, in this regard), into which POS application software is installed.

On the other hand, the user terminal 30 is one of network nodes for receiving the notification transmitted from the server apparatus 10 as described above and is configured of a general-purpose communication terminal device used by a sales representative, for example, which is a user. More specifically, the user terminal 30 is also a tablet-type terminal in the same manner as the register device 20, and application software for viewing the notification received from the server apparatus 10, POS application software which is the same as that of the register device 20, if needed, tutorial software for register operations, or the like may be installed in the user terminal 30.

Furthermore, while the call center 40 itself is not a constituent essential to the sales support system 100 of the present embodiment, the call center 40 is useful when making a phone call or the like to a client S to perform a follow-up action as described above. The call center 40 has operators or other human resources who tell the client the content of the follow-up action by phone.

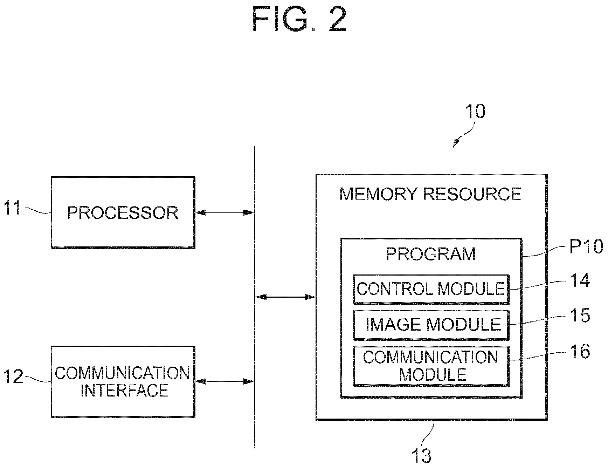

Fig. 2 is a system block diagram schematically illustrating an example of the configuration of the server apparatus 10. As illustrated in Fig. 2, the server apparatus 10 includes a processor 11, a communication interface 12, and a memory resource 13.

The processor 11, which includes an arithmetic logic unit for processing arithmetic, logical, and bit operations or the like and various registers (a program counter, a data register, an instruction register, a general-purpose register, and the like; different from the register device 20), interprets and executes a program P10 stored in the memory resource 13 and outputs a predetermined arithmetic processing result.

The communication interface 12 is a hardware module for use in connecting to the register device 20 and/or to the user terminal 30 via the network N and is a modulator-demodulator such as, for example, an ISDN modem, an ADSL modem, a cable modem, an optical modem, a soft modem, or the like.

The memory resource 13 is, for example, a logical device provided by a storage area of a physical device (a computer-readable recording medium or the like such as a disk drive or a semiconductor memory). In this case, a plurality of physical devices may be mapped into one logical device or one physical device may be mapped into a plurality of logical devices. Furthermore, this memory resource 13 may store logs or the like related to information transmission histories from respective register devices 20 or access histories of the user terminal 30.

The program P10 is a program for use in performing a series of information processes (classification, processing, analysis, etc. of information) with the use of information about operation histories transmitted from the plurality of register devices 20 and includes a plurality of software modules appropriately called and executed during the operation of the main program (the aforementioned server program or the like) of the server apparatus 10. These software modules are sub-programs modularized to perform respective specific processes and created by using, for example, a procedure, a sub-routine, a method, a function, a data structure, or the like. The term "module" means a unit compilable only in that part (though not limited thereto).

More specifically, the program P10 includes a control module 14 which performs various kinds of control arithmetic processing with respect to the information acquired from the register devices 20, modules which generate, display, or reproduce a text, an image, audio data, or the like notified to the user terminals 30, the call center 40, the clients S, or the like on the basis of a result of processing performed by the control module 14 (hereinafter, the modules will be collectively referred to as "image module 15"), and a communication module 16 which performs communication processing or the like with the network N through the communication interface 12. Incidentally, the memory resource 13 may store operation parameters such as parameters required for the control module 14 to perform various kinds of control arithmetic processing and parameters required for the image module 15 to perform the generation of various data or the display/reproduction processing thereof.

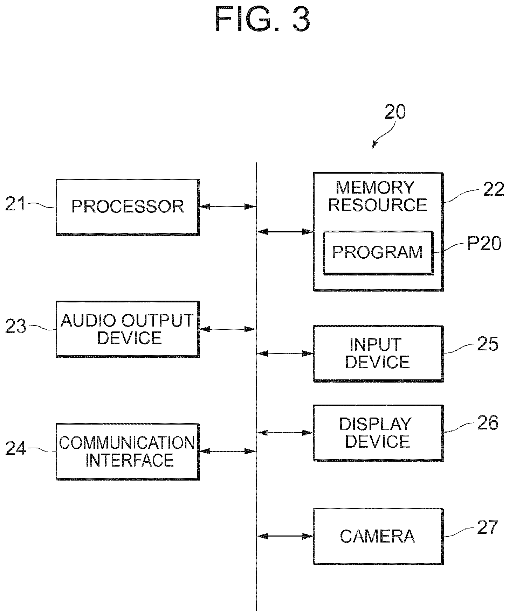

Fig. 3 is a system block diagram schematically illustrating an example of the configuration of the register device 20. As described above, the register device 20 in the present embodiment is a portable information terminal device, in which the POS application software is installed in the tablet-type terminal, having a processor 21, a memory resource 22, an audio output device 23, a communication interface 24, an input device 25, a display device 26, and a camera 27.

The processor 21 includes an arithmetic logic unit and various registers (a program counter, a data register, an instruction register, a general-purpose register, and the like; different from the register device 20). In addition, the processor 21 interprets and executes the POS application software which is a program P20 stored in the memory resource 22, performs accounting processing or the like by the client S according to the operation information input to the input device 25, and transmits information about various aspects of the operation histories thereof to the server apparatus 10 via the network N. Furthermore, the processor 21 causes the display device 26 to display text data or image data of the notification (an e-mail, an electronic message, or the like) transmitted to the dedicated account of the client S from the server apparatus 10 or reproduces the audio data on the audio output device 23.

In addition, the POS application software is able to be distributed via the network N from, for example, the server apparatus 10; the POS application software may be installed into the register device 20 before the register device 20 is delivered or lent to the client S or may be installed and updated by a manager, an employee, or the like of the client S or automatically after the register device 20 is delivered or lent to the client S.

The memory resource 22 is a logical device provided from the storage area of the physical device (for example, a computer-readable recording medium such as a disk drive or a semiconductor memory) and stores an operating system program, a driver program, various data or the like used for processing of the register device 20. As driver programs, for example, there are an input device driver program for controlling the input device 25, an output device driver program for controlling the audio output device 23 and the display device 26, and the like.

The audio output device 23 is, for example, a sound player capable of reproducing general sound data.

The communication interface 24 is used to provide a connection interface with the server apparatus 10 and includes a wireless communication interface and/or a wired communication interface.

The input device 25 is used to provide an interface for accepting a register input operation and may be, for example, a touch panel, a keyboard, a mouse, an information code reader, or the like.

The display device 26 is used to provide an image display interface for a register operation, an image display interface for browsing information stored in the register device 20 to a manager of the client S, an employee in charge of the register, or the like, and the display device 26 may be, for example, an organic EL display, a liquid crystal display, a CRT display, or the like.

The camera 27 is used to take a still image of an information code attached to a product or the like in accounting processing or a still image of the product itself or the like, for example.

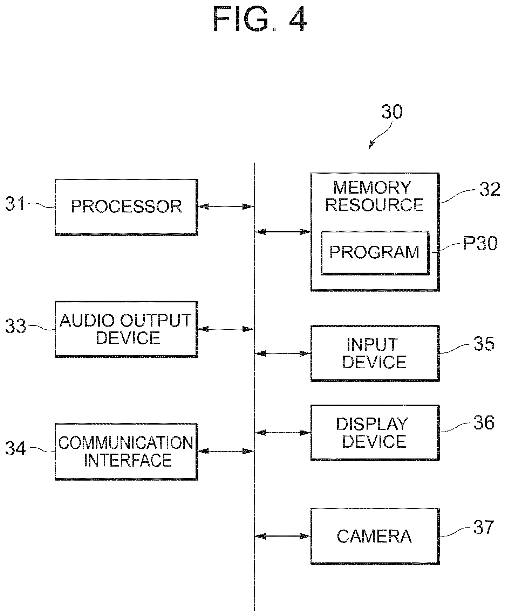

Fig. 4 is a system block diagram schematically illustrating an example of the configuration of the user terminal 30. As described above, in this embodiment, the user terminal 30 is a tablet-type terminal similar to the register device 20 and has a system configuration (physical configuration) equivalent to that of the register device 20. Specifically, the user terminal 30 includes a processor 31, a memory resource 32, an audio output device 33, a communication interface 34, an input device 35, a display device 36, and a camera 37.

The processor 31, which is configured in the same manner as the processor 21, receives a notification transmitted from the server apparatus 10, interprets and executes application software, which is a program P30 stored in the memory resource 32, and causes the display device 36 to display various text data and image data or reproduces various audio data on the audio output device 23.

The memory resource 32, which is configured in the same manner as the memory resource 22, stores an operating system program, a driver program, various data and the like used for processing of the user terminal 30. As examples of the driver program, there are an input device driver program for controlling the input device 35, an output device driver program for controlling the audio output device 33 and the display device 36, and the like.

The audio output device 33 is a sound player capable of reproducing, for example, general sound data similarly to the audio output device 23.

The communication interface 34 is used to provide a connection interface with the server apparatus 10, similarly to the communication interface 24, and is formed of a wireless communication interface or a wired communication interface.

The input device 35 is used to provide an interface for accepting an input operation for accessing information stored in the user terminal 30 and may be, for example, a touch panel, a keyboard, a mouse, or the like.

The display device 36 is used to provide an image display interface for browsing information stored in the user terminal 30 to a user (sales representative) and may be, for example, an organic EL display, a liquid crystal display, a CRT display, or the like. The camera 37 is, similarly to the camera 27, used to take a still image of, for example, an information code attached to a product or the like or the product itself or the like.

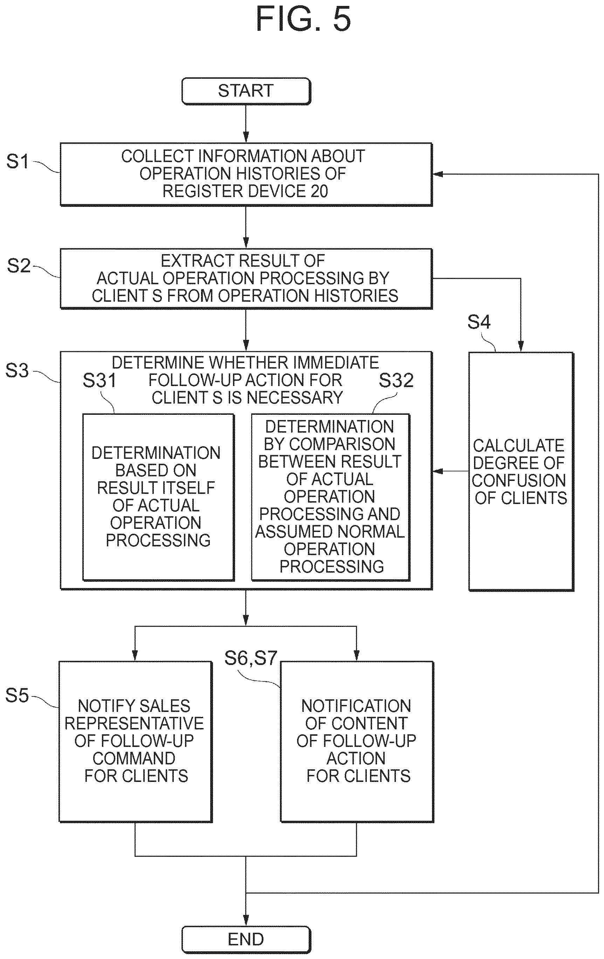

An example of an operation procedure in the sales support system 100 configured as described above will be further described by using Fig. 5. Fig. 5 is a flowchart illustrating an example of (a part of) processing flow in the sales support system 100.

### <Step S1: Collecting information about operation histories of register device 20>

First, a person in charge of the register of the client S activates the register device 20 (processing start) to start a program P20 (POS application software) in the processor 21 of the register device 20. The display device 26 of the register device 20 displays, for example, a login (sign in) screen to the POS system and the person in charge of the register inputs information necessary for the login.

In addition, before the login or after the completion of the login, the display device 26 displays icons, buttons, or the like for selection of various setting menus (for example, POS system setup, device settings, screen settings, account settings, security settings, product list settings, accounting settings, or the like). The person in charge of the register is allowed to select intended objects from the setting menus and to make various settings, as needed. After the completion of the required settings or if the settings have already been completed, the person in charge of the register is allowed to switch the screen of the display device 26 to the accounting menu of the product or the like and to operate the input device 25 of the register device 20 to perform accounting processing for the product or the like.

At this time, the processor 21 of the register device 20 sequentially transmits information on the input operation history from the input device 25 operated by the person in charge of the register and information on the screen transition history in the display device 26 to the server apparatus 10 by using the communication interface 24 in real time. Specifically, the processor 21 transmits information about operation histories, such as the input operation by the person in charge of the register in the first login screen to the POS system, the input operations in various settings, the input operation in the accounting processing of the product or the like, and screen transitions in the various operations, to the server apparatus 10 in real time. The processor 11 of the server apparatus 10 receives the information by using the communication interface 12, and thereby collects the information about the operation histories of the register device 20 and stores the information into the memory resource 13 (step S1). As described above, the processor 11 functions as "information collection unit."

Thereafter, the processor 11 of the server apparatus 10 calls the control module 14 of the program P10 and analyzes at an appropriate time the states of the register device 20 operated by the client on the basis of the operation histories of the register device 20 stored in the memory resource 13, and therefore, for example, the following information analysis and arithmetic processing are performed in real time. In this manner, the processor 11 functions also as "state analysis unit."

### <Step S2: Extracting result of actual operation processing performed by client from operation histories>

In this step, the processor 11 of the server apparatus 10 extracts a result of actually-performed operation processing with respect to a predetermined operation from the operation histories of the register device 20 operated by the person in charge of the register (step S2).

Specifically, in the case where the following results of operation processing or the like are found in the operation histories as the results of the operation processing performed by the person in charge of the register, with respect to, for example, the operation of "login": login success; login with less than a predetermined number of errors; login with a predetermined number or more of errors; multiple login failures; the time to login is less than the predetermined time; and the time to login is equal to or more than the predetermined time, the processor 11 extracts the results of the operation processing and stores the results in the memory resource 13.

Furthermore, in the case where the following results of operation processing or the like are found in the operation histories as a result of the operation processing performed by the person in charge of the register, with respect to the operation of various "settings": the residence time in the setting menu is less than the predetermined time; the residence time in the setting menu is equal to or more than the predetermined time; the number of times that the same type of setting menu is displayed is less than the predetermined number of times; and the number of times that the same type of setting menu is displayed is equal to or more than the predetermined number of times, the processor 11 extracts the results of the operation processing and stores the results in the memory resource 13.

Furthermore, in the case where the following results of operation processing or the like are found in the operation histories as a result of the operation processing performed by the person in charge of the register, with respect to the operation of various kinds of "processing" (accounting processing or the like): the processing time is less than the predetermined time; the processing time is equal to or more than the predetermined time; the number of times that an error is displayed is less than the predetermined number of times; and the number of times that an error is displayed is equal to or more than the predetermined number of times, the processor 11 extracts the results of the operation processing and stores the results in the memory resource 13.

### <Step S3: Determination of whether or not immediate follow-up action for client is necessary>

### (Determination based on result of actual operation processing itself)

Subsequently, the processor 11 of the server apparatus 10 determines whether or not an immediate follow-up action for the client S is necessary on the basis of the extracted result of actual operation processing described above (step S31). In this step, for example, in the case where various "flags" described below are put up, the processor 11 determines that an immediate follow-up action for the client S is necessary. In this manner, the processor 11 functions also as "follow-up necessity determination unit."

Specifically, in the case where the following results of operation processing are extracted, with respect to the operation of "login": login with a predetermined number or more of errors; multiple login failures; and the time to login is equal to or more than the predetermined time, the processor 11 determines that the person in charge of the register of the client S has difficulty in the login operation and then puts up a predetermined flag (referred to as "login flag" here) in association with the client S.

Furthermore, in the case where the following results of operation processing are extracted, with respect to the operation of various "settings": the residence time in the setting menu is equal to or more than the predetermined time; and the number of times that the same type of setting menu is displayed is equal to or more than the predetermined number of times, the processor 11 determines that the person in charge of the register of the client S has difficulty in the setting operation and then puts up a predetermined flag (referred to as "setting flag" here) in association with the client S.

Furthermore, in the case where the following results of operation processing are extracted, with respect to the operation of various kinds of "processing" (accounting processing or the like): the processing time is equal to or more than the predetermined time; and the number of times that an error is displayed is equal to or more than the predetermined number of times, the processor 11 determines that the person in charge of the register of the client S has difficulty in the operation of the accounting processing or the like and then puts up a predetermined flag (referred to as "processing flag" here) in association with the client S.

The processor 11 is able to determine that the client S is confused in the operation related to the login flag, the setting flag, and the processing flag described above among the operations of the register device 20, with respect to the client S for which these flags have been set and to determine that an immediate follow-up action is necessary for the client S.

### (Determination by comparison between result of actual operation processing and assumed normal operation processing)

Alternatively, the processor 11 of the server apparatus 10 performs determination by comparison between the result of actual operation processing and a normal (proper or permissible) operation processing assumed in the register device 20, instead of or in addition to the determination based on the aforementioned extracted result of actual operation processing (step S32).

Specifically, the processor 11 assumes that the operation of "login" is normal operation processing in the case where the number of failures (the number of errors) is up to about three. In the case of a result of actual operation processing with three or more failures (errors), the processor 11 determines that the person in charge of the register of the client S has difficulty in the login operation and puts up a login flag in association with the client S.

Furthermore, the processor 11 assumes that the operation of various "settings" is normal operation processing in the case where the residence time in the setting menu is up to about 10 minutes. In the case where the residence time as the result of actual operation processing is 10 minutes or more, the processor 11 determines that the person in charge of the register has difficulty in the setting operation and puts up a setting flag in association with the client S.

Still further, the processor 11 assumes that the operation of various kinds of "processing" is normal operation processing in the case where the number of times that an error is displayed is up to about three. In the case where an error is displayed more than three times as a result of actual operation processing, the processor 11 determines that the person in charge of the register of the client S has difficulty in the processing operation and puts up a processing flag in association with the client S.

Also in this case, the processor 11 is able to determine that the client S is confused in the operation related to the login flag, the setting flag, and the processing flag described above among the operations of the register device 20, with respect to the client S for which these flags have been set and to determine that an immediate follow-up action is necessary for the client S.

### <Step S4: Calculation of degree of client confusion)

Moreover, the processor 11 of the server apparatus 10 calculates a degree that the client S is confused about the operation of the register device 20, instead of or in addition to the determination of whether or not an immediate follow-up action for the client S is necessary (step S4).

Specifically, in the case where the permissible number of failures (number of errors) is previously set to three with respect to the operation of "login" and the number of failures (number of errors) in the result of actual operation processing is N, the processor 11 calculates the degree that the person in charge of the register of the client S is confused about the login operation to be N/3. For example, the processor 11 calculates the degree of confusion to be 1/3 (= 0.33) if N = 1 and the degree of confusion to be 5/3 (= 1.7) if N = 5.

Moreover, in the case where the permissible residence time in the setting menu is previously set to 10 minutes with respect to the operation of various "settings" and the residence time in the result of actual operation processing is T minutes, the processor 11 calculates the degree that the person in charge of the register of the client S is confused about the setting operation to be T/3. For example, the processor 11 calculates the degree of confusion to be 1/10 (= 0.1) if T = 1 and the degree of confusion to be 15/10 (=1.5) if T = 15.

Furthermore, in the case where the permissible number of times that an error is displayed is previously set to three with respect to the operation of various kinds of "processing" and the number of times that an error is displayed is H in the result of actual operation processing, the processor 11 calculates the degree that the person in charge of the register of the client S is confused about the processing operation to be H/3. For example, the processor 11 calculates the degree of confusion to be 2/3 (= 0.67) if H = 2 and the degree of confusion to be 6/3 (= 2.0) if H = 6.

The processor 11 may give notice of the degree of confusion calculated as described above, so as to be contained in a follow-up command described later which is transmitted to the client S determined to be in need of an immediate follow-up action, to the user terminal 30 of the sales representative. In addition, it is also possible to determine that the immediate follow-up action for the client S is necessary on the basis of the degree of confusion of the client S calculated here, for example, if the degree of confusion exceeds a predetermined value (for example, "1").

### <Step S5: Notifying sales representative of follow-up command for client>

Subsequently, the processor 11 of the server apparatus 10 notifies the sales representative of the follow-up command for the client S determined to be in need of the immediate follow-up action (step S5: path K1 schematically illustrated in Fig. 1). In this case, as the sales representative to be notified of the follow-up command, it is possible to select a person mainly in charge of the client. Alternatively, it is also possible to select a person present relatively in the vicinity (in the neighborhood) of the client S on the basis of the location information of the client S (which can be acquired via the network N from the register 20) and location information of a plurality of sales representatives (which can be acquired via the network N from the user terminals 30 used by the sales representatives). As described above, the processor 11 functions also as "notification unit."

Note here that the notification method of the follow-up command is not particularly limited, and the method includes push notification to the user terminal 30, transmission of an e-mail or an electronic message, and the like. In addition, naturally the follow-up command may contain additional information such as information on the client S (location, contact information, map, route, etc.), the aforementioned flag of the operation in which the client S has difficulty, and a calculated value of the degree of confusion of the client S.

Moreover, in this case, application software (a sales support computer program) may be previously installed in the user terminal 30 as the program P30 stored in the memory resource 32 of the user terminal 30, wherein the application software receives the above push notification, e-mail, electronic message, or the like transmitted from the server apparatus 10, displays the text data or image data of the content on the display device 36 using the processor 31, and/or reproduces audio data with the audio output device 33. In this manner, the processor 31 functions as "follow-up command recognition unit that makes the sale representative recognize the follow-up command notified of by the notification unit."

### <Steps S6 and S7: Notification of content of follow-up action for client>

Alternatively, the processor 11 of the server apparatus 10 may give notice of the content of the follow-up action directly or indirectly to the client S determined to be in need of an immediate follow-up action, instead of or in addition to notifying (the user terminal 30 of) the sales representative of the follow-up command for the client.

In this case, as an example of the direct notification, the content of the follow-up action for the client S (a tutorial or the like of the operation in which the client S has difficulty) is transmitted by an e-mail, an electronic message, or the like (step S6: path K2 schematically illustrated in Fig. 1). Furthermore, as an example of the indirect notification, the follow-up command for the client S is once transmitted to the call center 40 having phone operators and the like by push notification, an e-mail, an electronic message, or the like. Thereafter, the operator gives the content of the follow-up action for the client S (a tutorial or the like of the operation in which the client S has difficulty) by telephone or the like on the basis of the follow-up command to provide support (step S7: path K3 schematically illustrated in Fig. 1).

The processing of the above steps S1 to S7 in the server apparatus 10 is performed at an appropriate time continuously and in real time during the operation of the register device 20 and is terminated by logoff (sing off) from the POS system or by the halt or stop of the operation of the register device 20. In addition, the method used for the real-time information processing is not particularly limited, and, for example, an open-source big data processing system, a real-time processing platform, a real-time analysis engine, or the like may be used as the method.

According to the sales support computer program, the sales support application program, the sales support system 100, and the control method therefor configured as described above, the collection of information about operation histories of the register devices 20 by clients S and the analysis of the operation histories of the register devices 20 by the clients S based thereon can be performed at an appropriate time and in real time. In addition, whether or not an immediate follow-up action for a client S is necessary can be determined at an appropriate time and in real time on the basis of a result of actual operation processing of the register device 20 performed by the client S, thereby enabling a prompt and sufficient follow-up action to be performed for the client S.

Furthermore, the server apparatus 10 notifies the user terminal 30 used by a sales representative mainly in charge of the client S or a sales representative relatively in the vicinity of the client S of a follow-up command for the client S, and therefore the sales representative is able to provide an efficient and effective follow-up action to the client S having difficulty in the operation of the register device 20. Furthermore, it is also possible to give the content of the follow-up action to the client S, instead of or in addition to notifying the sales representative of the follow-up command for the client S, thereby enabling a wide variety of and more prompt support to be provided to the client S.

Moreover, the prompt and sufficient follow-up action is able to be provided to the client as described above, thereby enabling an increase in the sales efficiency, the client satisfaction level, and the sales effect, which enables not only the retention of existing clients, but also increase in the opportunity of acquiring a new transaction.

Incidentally, as described above, the aforementioned embodiments are illustrative only for describing the present disclosure and do not intend to limit the scope of the present disclosure to the embodiments. Furthermore, the present disclosure may be modified in various forms without departing from the spirit and scope of the present disclosure. For example, a person skilled in the art is able to replace the resource (a hardware resource or a software resource) described in the embodiments with an equivalent, and such replacement is also included in the scope of the present disclosure.

Furthermore, either one or both of steps S31 and S32 may be executed, and step S4 need not always be executed. Furthermore, one or more of steps S5 to S7 may be executed or any of steps S5 to S7 may be appropriately selected and executed, for example, according to the degree of client confusion or to the content of a case about which the client is confused. Furthermore, the computer for constituting the server apparatus 10 is not limited to the host computer and may be composed of, for example, a general-purpose communication terminal device. Still further, the host computer constituting the server apparatus 10 need not always be one computer, but may be composed of a plurality of sub-computers distributed on the network N.

Moreover, naturally a gateway server or the like may intervene between the server apparatus 10 and the register device 20 and between the server apparatus 10 and the user terminal 30, where the gateway server converts the communication protocol therebetween. Furthermore, all of the server apparatus 10, the register device 20, and the user terminal 30 may be general-purpose communication terminal devices, such as, for example, a desktop personal computer, a notebook personal computer, a tablet personal computer, a laptop personal computer, a mobile phone including a smartphone, and the like. More specifically, the mobile phone includes a personal digital cellular (PDC), a personal communication system (PCS), a global system for mobile communications (GSM®), a personal handy phone system (PHS), a personal digital assistant (PDA), and other handheld mobile terminals, for example. Furthermore, as a data communication system in these mobile phones, there are, for example, a wideband code division multiple access (W-CDMA), a code division multiple access-2000 (CDMA-2000), an international mobile telecommunication-2000 (IMT-2000), a wireless broadband Internet (Wibro), and other standards.

Moreover, the above embodiments of the present disclosure can be more specifically described as follows.

Specifically, the sales support computer program according to the present disclosure causes a computer to function as: an information collection unit for collecting, via a network and in real time, information about operation histories of devices having a cash register function operated by clients; a state analysis unit for extracting a result of actual operation processing from the operation histories; and a follow-up necessity determination unit that calculates a ratio between the number of operations in the result of actual operation processing and a preset predetermined number of operations or a ratio between the operation time in the result of actual operation processing and preset predetermined operation time, as a degree that the client is confused about the operation of the device having the cash register function and, in the case where the degree of confusion exceeds a predetermined value, determines that the follow-up action for the client is necessary in the absence of a request for the follow-up action from the client.

To be more precise, the above operation processing is related to login, settings, or accounting, for example.

Moreover, the computer may be caused to function as a notification unit that notifies a sales representative of a follow-up command for the client determined to be in need of the follow-up action, or that directly or indirectly notifies the client, having been determined to be in need of the follow-up action, of the content of the follow-up action.

Furthermore, the notification unit may decide a sales representative who is notified of the command on the basis of location information of the client and location information of a plurality of sales representatives.

Still further, the computer used by a sales representative may be caused to function as a follow-up command recognition unit that makes the sales representative recognize the content of a follow-up command notified of by the notification unit that is executed by the above sales support computer program, by displaying the content on a display device or reproducing the content on an audio output device.

Furthermore, a sales support system according to the present disclosure includes: an information collection unit that collects, via a network and in real time, information about operation histories of devices having a cash register function operated by clients; a state analysis unit that extracts a result of actual operation processing from the operation histories; and a follow-up necessity determination unit that calculates a ratio between the number of operations in the result of actual operation processing and a preset predetermined number of operations or a ratio between the operation time in the result of actual operation processing and preset predetermined operation time, as a degree that the client is confused about the operation of the device having the cash register function and, in the case where the degree of confusion exceeds a predetermined value, determines that the follow-up action for the client is necessary in the absence of a request for the follow-up action from the client.

Furthermore, a control method according to the present disclosure is a control method for a sales support system having an information collection unit, a state analysis unit, and a follow-up necessity determination unit, wherein the information collection unit collects, via a network and in real time, information about operation histories of devices having a cash register function operated by clients, a state analysis unit extracts a result of actual operation processing from the operation histories, and a follow-up necessity determination unit calculates a ratio between the number of operations in the result of actual operation processing and a preset predetermined number of operations or a ratio between the operation time in the result of actual operation processing and preset predetermined operation time, as a degree that the client is confused about the operation of the device having the cash register function and, in the case where the degree of confusion exceeds a predetermined value, determines that the follow-up action for the client is necessary in the absence of a request for the follow-up action from the client.

### Industrial Applicability

According to the present disclosure, the prompt and sufficient follow-up action can be provided to the client, which thereby increases the sales efficiency, the client satisfaction level, and the sales effect, and therefore the present disclosure is widely applicable to activities such as the design, manufacturing, offering, sales, or the like of a program, a system, and a method in the field of offering services requiring a follow-up action for clients.

### Reference Signs List

10: server apparatus
11: processor (information collection unit, state analysis unit, follow-up necessity determination unit, notification unit)
12: communication interface
13: memory resource
14: control module
15: image module
16: communication module
20: register device (client device)
21: processor
22: memory resource
23: audio output device
24: communication interface
25: input device
26: display device
27: camera
30: user terminal (user device)
31: processor (follow-up command recognition unit)
32: memory resource
33: audio output device
34: communication interface
35: input device
36: display device
37: camera
40: call center
100: sales support system
K1, K2, K3: path
N: network
P10, P20, P30: program
S: client
S1 to S7: Step
S31, S32: Step

## Claims

1. A sales support computer program causing a computer to function as:
an information collection unit for collecting, via a network, information about operation histories of client devices operated by clients;
a state analysis unit for analyzing at an appropriate time the states of the client devices operated by the clients on the basis of the operation histories; and
a follow-up necessity determination unit for determining at an appropriate time whether or not an immediate follow-up action for the client is necessary on the basis of the operation states.

2. The sales support computer program according to claim 1, wherein the follow-up necessity determination unit calculates a degree that the client is confused about the operation of the client device.

3. The sales support computer program according to claim 1, wherein the client device is a register or a device having a register function.

4. The sales support computer program according to claim 1, wherein the follow-up necessity determination unit extracts a result of actual operation processing performed by the client from the operation histories, determines whether or not an immediate follow-up action for the client is necessary on the basis of the result of actual operation processing, and/or by comparing the result of actual operation processing with normal operation processing assumed in the client device, and/or calculates a degree that the client is confused.

5. The sales support computer program according to claim 1, the program causing a computer to function as a notification unit that notifies a sales representative of a follow-up command for the client determined to be in need of the immediate follow-up action, or that directly or indirectly notifies the client, determined to be in need of the immediate follow-up action is necessary, of the content of the follow-up action.

6. The sales support computer program according to claim 5, wherein the notification unit decides a sales representative, who is notified of the command, on the basis of location information of the client and location information of a plurality of sales representatives.

7. A sales support application program causing a computer used by a sales representative to function as a follow-up command recognition unit that makes the sales representative recognize a follow-up command notified of by the notification unit that is executed by the sales support computer program according to claim 5.

8. A sales support computer program causing a computer to function as:
an information collection unit for collecting, via a network and in real time, information about operation histories of devices having a cash register function operated by clients;
a state analysis unit for extracting a result of actual operation processing from the operation histories; and
a follow-up necessity determination unit that calculates a ratio between the number of operations in the result of actual operation processing and a preset predetermined number of operations or a ratio between the operation time in the result of actual operation processing and preset predetermined operation time, as a degree that the client is confused about the operation of the device having the cash register function and, in the case where the degree of confusion exceeds a predetermined value, determines that the follow-up action for the client is necessary in the absence of a request for the follow-up action from the client.

9. A sales support system comprising:
an information collection unit that collects, via a network, information about operation histories of client devices operated by clients;
a state analysis unit that analyzes at an appropriate time the states of the client devices operated by the clients on the basis of the operation histories; and
a follow-up necessity determination unit that determines at an appropriate time whether or not an immediate follow-up action for the client is necessary on the basis of the operation states.

10. A method of controlling a sales support system having an information collection unit, a state analysis unit, and a follow-up necessity determination unit, comprising:
collecting, via a network, information about operation histories of client devices operated by clients by using the information collection unit;
analyzing at an appropriate time the states of the client devices operated by the clients on the basis of the operation histories by using the state analysis unit; and
determining at an appropriate time whether or not an immediate follow-up action for the client is necessary on the basis of the operation states by using the follow-up necessity determination unit.
